(19) **European Patent Office**

(11) **EP 3 644 475 A1**

(12) # EUROPEAN PATENT APPLICATION

(43) Date of publication:
**29.04.2020 Bulletin 2020/18**

(21) Application number: **18202207.9**

(22) Date of filing: **24.10.2018**

(51) Int Cl.:
*H02J 50/10* (2016.01)     *H02J 50/12* (2016.01)
*H02J 50/90* (2016.01)     *H02J 50/80* (2016.01)
*H04W 4/02* (2018.01)     *H05B 6/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
- **Buil, Vincentius Paulus
  5656 AE Eindhoven (NL)**
- **Geurts, Lucas Jacobus Franciscus
  5656 AE Eindhoven (NL)**

- **Veltman, Eddy Gerrit
  5656 AE Eindhoven (NL)**
- **Latul, Julien Philippe
  5656 AE Eindhoven (NL)**
- **Allende, Paula Andrea
  5656 AE Eindhoven (NL)**
- **Thackray, Donald
  5656 AE Eindhoven (NL)**
- **de Klein, Nicole Louisa
  5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **A POWER TRANSFER APPARATUS AND METHOD THEREFOR**

(57) A wireless power transfer system comprises a power transmitter transferring power to a power receiver. The power is transferred between two power transfer coils. An apparatus comprises a coupling processor (401) determining a first coupling measure indicative of a coupling between the power transfer coils and a pose processor (403) determines a first pose indication for the relative pose between the power transmitter and the power receiver. A user input processor (405) then determines a user input value in response to the first pose indication. The approach may provide user friendly user input using a wireless power transfer system.

**FIG. 5**

Printed by Jouve, 75001 PARIS (FR)

## Description

### FIELD OF THE INVENTION

The invention relates to a wireless power transfer apparatus and a method therefor, and in particular, but not exclusively, to a wireless power transfer apparatus for a Qi wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

Wireless power transfer systems, such as Qi power transfer systems, may provide a range of functions and services which may effectively support power transfer to a range of devices in a range of applications. However, there is a desire to further enhance the systems to provide additional or improved functions and services, and in particular to provide additional functions and services that may enhance the user experience.

Hence, an improved power transfer approach would be advantageous, and in particular, an approach allowing increased flexibility, reduced cost, reduced complexity, enhanced user experience, additional or improved functions or services, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transfer apparatus for a wireless power transfer from a power transmitter to a power receiver via a power transfer signal, the power transfer apparatus being one of the power transmitter and the power receiver, and comprising: a first power transfer coil for transferring power with a complementary power transfer coil of a complementary power transfer apparatus, the complementary power transfer apparatus being the other of the power transmitter and the power receiver; a coupling processor for determining a first coupling measure indicative of a coupling between the first power transfer coil and the complementary power transfer coil; a pose processor for determining a first pose indication for the power transfer apparatus relative to the complementary power transfer apparatus in response to the first coupling measure; and a user input processor for determining a user input value in response to the first pose indication.

The invention may provide an improved user experience in many embodiments and scenarios, and may provide additional functionality and services for a wireless power transfer system. In many embodiments and scenarios, it may provide a very intuitive and advantageous means for controlling a process or operation, including e.g. the wireless power transfer operation itself.

The approach may allow additional functionality while maintaining low complexity and low resource usage. In many embodiments, the additional functionality may be provided without requiring any additional hardware and with only a low computational resource overhead.

The approach may in many scenarios provide an accurate and practical means for e.g. controlling a process or operation.

A pose may be a position and/or orientation. A pose indication may be indicative of at least one of a position and an orientation/ rotation.

The user input value may be a value indicating at least one of a parameter value and a command/ instruction for a process or operation. The process or operation may in some embodiments be the power transfer itself. The user input value may be a user input value for the power transfer operation. The power transfer apparatus may in some embodiments comprise a controller for adapting a property/ parameter of the power transfer in response to the user input value.

In accordance with an optional feature of the invention, the power transfer apparatus further comprises a communicator for communicating the user input value to another apparatus.

This may provide improved flexibility and may allow efficient user control for many different processes.

In accordance with an optional feature of the invention, the another apparatus is the complementary apparatus.

This may be particularly advantageous in many embodiments. For example, if the user input value is used to adapt the power transfer operation, the approach may allow an adaptation to be performed at both devices.

In accordance with an optional feature of the invention, the power transfer further comprises a second power transfer coil and: the coupling processor is further arranged to determine a second coupling measure indicative of a coupling between the second power transfer coil and the complementary power transfer coil; and the pose processor is further arranged to determine the first pose indication in response to the second coupling measure.

This may provide improved determination of the user input value in many embodiments. It may allow a more reliable determination of a user input value and/or may facilitate the required user interaction. For example, it may make determination of an orientation/ rotation more accurate and/or provide an increased range of detection.

In accordance with an optional feature of the invention, the coupling processor is further arranged to determine a second coupling measure indicative of a coupling between the first power transfer coil and an additional power transfer coil of the complementary apparatus; and the pose processor is further arranged to determine the first pose indication in response to the second coupling measure.

This may provide improved determination of the user input value in many embodiments. It may allow a more reliable determination of a user input value and/or may facilitate the required user interaction. For example, it may make determination of an orientation/ rotation more accurate and/or provide an increased range of detection.

In accordance with an optional feature of the invention, the power transfer apparatus comprises a first power transfer coil arrangement of the power transfer apparatus which comprises the first power transfer coil is rotationally variant relative to a second power transfer coil arrangement of the complementary apparatus which comprises the complementary power transfer coil; and wherein the pose processor is arranged to determine the first pose indication in response to the rotational variation.

This may provide improved, facilitated and/or more flexible determination of a pose indication suitable for determining the user input value in many embodiments. The arrangements may be rotationally variant (not rotationally invariant for all rotation values) due to one or more coils of one or both of the arrangements being rotationally variant or may e.g. be rotationally variant due to the positioning of coils in one or both of the arrangements being rotationally variant.

In accordance with an optional feature of the invention, the power transfer apparatus comprises an element for constraining a position of the complementary power transfer apparatus relative to the power transfer apparatus.

This may provide improved, facilitated, and/or more flexible determination of a user input value in many embodiments. In some embodiments, the element may comprise a magnet arranged to magnetically couple to a magnet of the complementary device.

In accordance with an optional feature of the invention, the element is a magnetic element arranged to generate a magnetic field for constraining the position by interacting with a magnetic field generated by the complementary apparatus.

This may provide particularly advantageous performance and/or implementation in many embodiments. The magnetic element may be an electromagnetic element, such as an inductor or coil.

In accordance with an optional feature of the invention, the magnetic element is the first power transfer coil.

This may provide particularly advantageous performance and/or implementation in many embodiments.

In accordance with an optional feature of the invention, the power transfer apparatus comprises an element for restricting an orientation of the complementary power transfer apparatus relative to the power transfer apparatus.

This may provide particularly advantageous performance and/or implementation in many embodiments

In accordance with an optional feature of the invention, the first transfer coil arrangement consists only of the first power transfer coil and the second power transfer coil arrangement consists only of the complementary power transfer coil.

The approach may provide efficient performance while maintaining low complexity.

In accordance with an optional feature of the invention, the power transfer apparatus is the power receiver and the complementary power transfer apparatus is the power transmitter.

In accordance with an optional feature of the invention, the power transfer apparatus is the power transmitter and the complementary power transfer apparatus is the power receiver.

In accordance with an optional feature of the invention, the coupling processor is further arranged to determine a second coupling measure indicative of a coupling between the first power transfer coil and an additional power transfer coil of an additional power receiver; the pose processor is further arranged to determine a second pose indication for the power transfer apparatus relative to the additional power receiver in response to the second coupling measure; and the user input processor is arranged to determine the user input value in response to the first pose indication relative to the second pose indication.

This may provide an improved user experience in many embodiments.

According to an aspect of the invention there is provided a method of operation for a power transfer apparatus performing a wireless power transfer from a power transmitter to a power receiver via a power transfer signal, the power transfer apparatus being one of the power transmitter and the power receiver, and the method comprising: a first power transfer coil transferring power with a complementary power transfer coil of a complementary power transfer apparatus, the complementary power transfer apparatus being the other of the power transmitter and the power receiver; determining a first coupling measure indicative of a coupling between the first power transfer coil and the complementary power transfer coil; determining a first pose indication for the power transfer apparatus relative to the complementary power transfer apparatus in response to the first coupling measure; and determining a user input value in response to the first pose indication.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of a power transfer system in accordance with some embodiments of the invention;

FIG. 2 illustrates an example of elements of a power transmitter in accordance with some embodiments of the invention;

FIG. 3 illustrates an example of elements of a power receiver in accordance with some embodiments of the invention;

FIG. 4 illustrates an example of elements of an apparatus in accordance with some embodiments of the invention;

FIG. 5 illustrates an example of an application for an apparatus in accordance with some embodiments of the invention;

FIG. 6 illustrates an example of a configuration for power transmitter coils and power receiver coils for a wireless power transfer system in accordance with some embodiments of the invention;

FIG. 7 illustrates an example of a configuration for power transmitter coils and power receiver coils for a wireless power transfer system in accordance with some embodiments of the invention;

FIG. 8 illustrates an example of a configuration for power transmitter coils and power receiver coils for a wireless power transfer system in accordance with some embodiments of the invention;

FIG. 9 illustrates an example of a configuration for power transmitter coils and power receiver coils for a wireless power transfer system in accordance with some embodiments of the invention;

FIG. 10 illustrates an example of a configuration for power transmitter coils and power receiver coils for a wireless power transfer system in accordance with some embodiments of the invention;

FIG. 11 illustrates an example of a configuration for power receiver coils for a wireless power transfer system in accordance with some embodiments of the invention;

FIG. 12 illustrates an example of a configuration for power transmitter coils and power receiver coils for a wireless power transfer system in accordance with some embodiments of the invention;

FIG. 13 illustrates an example of a configuration for power transmitter coils and power receiver coils for a wireless power transfer system in accordance with some embodiments of the invention;

FIG. 14 illustrates an example of an application for an apparatus in accordance with some embodiments of the invention; and

FIG. 15 illustrates an example of a configuration for power transmitter coils and power receiver coils for a wireless power transfer system in accordance with some embodiments of the invention.

DETAILED DESCRIPTION OF THE EMBODIMENTS

The following description focuses on embodiments of the invention applicable to a wireless power transfer system utilizing a power transfer approach such as known from the Qi specifications. However, it will be appreciated that the invention is not limited to this application but may be applied to many other wireless power transfer systems.

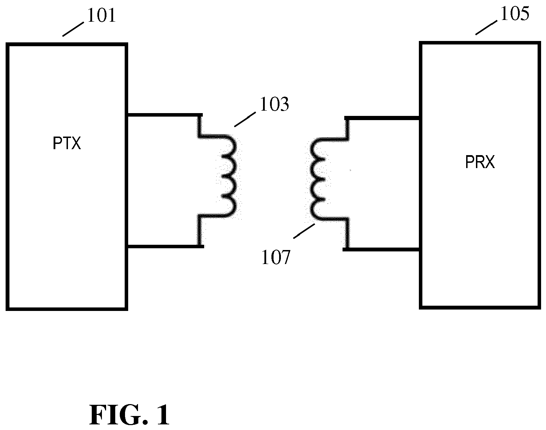

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides a wireless inductive power transfer from the power transmitter 101 to the power receiver 105. Specifically, the power transmitter 101 generates a wireless inductive power transfer signal (also referred to as a power transfer signal or an inductive power transfer signal), which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz (or e.g. for high power kitchen applications, the frequency may e.g. typically be in the range between 20kHz to 80kHz). The transmitter coil 103 and the receiver coil 107 are loosely coupled and thus the receiver coil 107 picks up (at least part of) the power transfer signal from the power transmitter 101. Thus, the power is transferred from the power transmitter 101 to the power receiver 105 via a wireless inductive coupling from the transmitter coil 103 to the receiver coil 107. The term power transfer signal is mainly used to refer to the inductive signal/ magnetic field between the transmitter coil 103 and the receiver coil 107 (the magnetic flux signal), but it will be appreciated that by equivalence it may also be considered and used as a reference to an electrical signal provided to the transmitter coil 103 or picked up by the receiver coil 107.

In the example, the power receiver 105 is specifically a power receiver which receives power via receiver coil 107. However, in other embodiments, the power receiver 105 may comprise a metallic element, such as a metallic heating element, in which case the power transfer signal induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications, and in excess of 100 W and up to more than 1000W for high power applications, such as e.g. kitchen applications.

In the following, the operation of the power transmitter 101 and the power receiver 105 will be described with specific reference to an embodiment in accordance with the Qi Specification (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

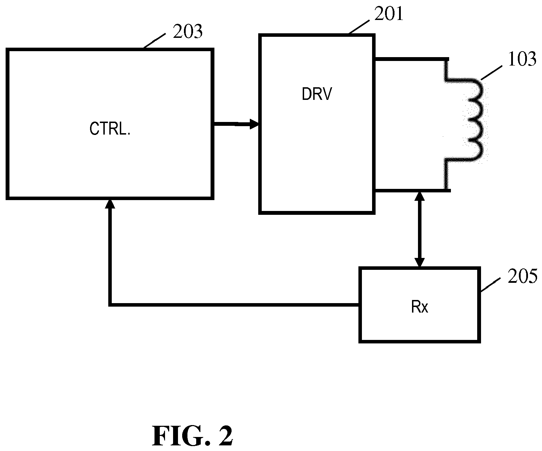

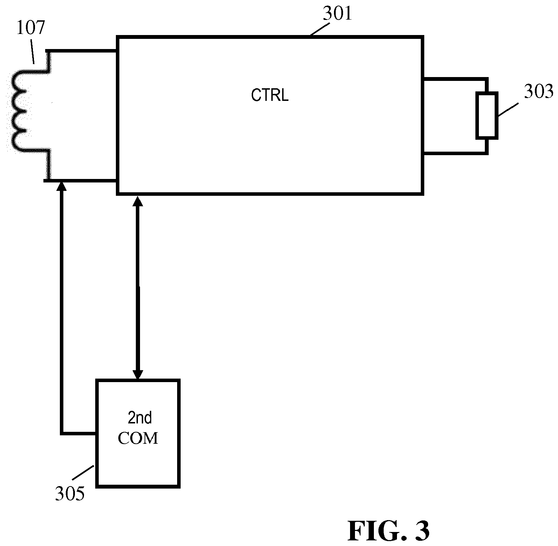

FIG. 2 illustrates elements of the power transmitter 101 and FIG. 3 illustrates elements of the power receiver 105 of FIG. 1 in more detail.

FIG. 2 illustrates an example of elements of the power transmitter 101 of FIG. 1 in more detail. The transmitter coil 103 is coupled to a driver 201 which generates a drive signal for the transmitter coil 103. The driver 201 generates the current and voltage signal which is fed to the transmitter inductor 103. The driver 201 is typically a drive circuit in the form of an inverter which generates an alternating signal from a DC Voltage. The output of the driver 201 is typically a switch bridge generating the drive signal by the appropriate switching of switches of the switch bridge.

The driver 201 is coupled to a power transmitter controller 203 which is arranged to control the operation of the power transmitter 101. The power transmitter controller 203 may be arranged to control the operation of the power transmitter 101 to perform the required and desired functions associated with power transfer protocols of the system, and may specifically in the present example be arranged to control the power transmitter 101 to operate in accordance with the Qi Specifications. For example, the power transmitter controller 203 may comprise functionality for detecting a power receiver, for initiation power transfer, for supporting power transfer, for terminating power transfer etc.

In the example, the power transmitter 101 further comprises a power transmitter communicator 205 which is arranged to communicate with the power receiver 105. Specifically, the power transmitter communicator 205 is arranged to receive messages from the power receiver 105 e.g. by decoding load modulation of the power transfer signal as will be known to the skilled person, e.g. from the Qi power transfer specifications. The power transmitter communicator 205 may communicate messages to the power receiver e.g. by modulating the power transfer signal as will be known to the skilled person.

In some embodiments, communication may be performed using a separate communication channel which may be achieved using a separate communication coil, or indeed using the transmitter coil 103. For example, in some embodiments Near Field Communication may be implemented or a high frequency carrier (e.g. with a carrier frequency of 13.56 MHz) may be overlaid on the power transfer signal.

FIG. 3 illustrates some exemplary elements of the power receiver 105.

The receiver coil 107 is coupled to a power receiver controller 301 which couples the receiver coil 107 to a load 303. The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi specifications.

In order to support communication from the power receiver 105 to the power transmitter 101 the power receiver 105 comprises a power receiver communicator 305.

The power receiver communicator 305 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the power receiver communicator 305 is furthermore arranged to demodulate amplitude, frequency, and/or phase modulation of the power transfer signal in order to retrieve data transmitted from the power transmitter.

As previously mentioned, in some embodiments, communication in one or both directions may be implemented using a separate communication system, such as e.g. an NFC communication system (or even based Bluetooth or WiFi communication).

In comparison to conventional power transfer systems, the described power transfer signal comprises additional functionality, and in particular includes functionality for providing a novel user input that may be used to control the power transfer or indeed other functionality, including functionality of other devices.

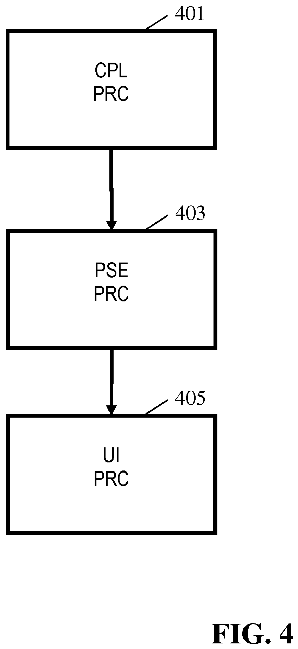

FIG. 4 illustrates and example of functionality for generating such a user input. The functionality may be implemented in the power transmitter 101 or in the power receiver 105, and specifically may be implemented in the power transmitter controller 203 or in the power receiver controller 301.

The functionality comprises a coupling processor 401 which is arranged to determine a coupling measure indicative of a coupling between the power transfer coils of the power transmitter 101 and the power receiver 105, i.e. specifically between the transmitter coil 103 and the receiver coil 107.

The coupling factor is a value between 0 and 1 which reflects the fraction of flux generated by the transmitter coil 103 that penetrates the receiver coil 107. The coupling factor may also often be referred to as a coupling coefficient.

The coupling factor may e.g. be expressed by:

$$k = \frac{L_{12}}{\sqrt{L_{11} \cdot L_{22}}}$$

where $L_{11}$ and $L_{22}$ are the self inductances and $L_{12}$ is the

coupling or mutual inductance.

The coupling measure may be determined in different ways in different embodiments. The coupling measure may in particular be determined in response to measurements of at least one of a measured current and voltage of the transmitter coil 103 and at least one of a measured current and voltage of the power receiver.

In many embodiments, the coupling measure may be determined as the ratio between the open loop voltages of the transmitter coil 103 ($U_1$) and the receiver coil 107 ($U_2$) and knowledge of the self inductances, since:

$$u = \frac{U_2}{U_1} = k \sqrt{\frac{L_2}{L_1}}$$

Thus, in some embodiments, the system may at regular intervals during the power transfer, e.g. as part of a time frame, enter a short measurement time interval in which the load is disconnected at the power receiver side and the open loop voltages are measured. The coupling factor may then be determined based on a predetermined value being used for the self inductances.

In some embodiments, the determination of the coupling measure may be determined based on the equation:

$$k_{12} = \frac{U_2}{U_1} \cdot \frac{n_1}{n_2}$$

where:

K$_{12}$ is the coupling factor from L1 to L2 ($k_{21}$ can be different than $k_{12}$ when there is asymmetry in the system),
$U_1$ is the voltage over the primary coil which is put there by a source,
$U_2$ is the voltage that appears over the secondary coil in the no-load condition,
$n_1$ is the number of turns on the primary coil,
n2 is the number of turns on the secondary coil.

This approach may be more practical in many scenarios since the turn ratio is independent of the positioning of the coils and may be easier to determine than the inductances (which may change due to the proximity of e.g. the ferrite of the complementary coil.

Another example may be to measure the coil voltage and current at both the primary and secondary side, i.e. at both the power transmitter and the power receiver. Then if the turn ratio of the coils and the operating frequency is known, the coupling factor may be calculated.

Another approach may be to only track changes in the coupling factor instead of measuring the absolute value, i.e. the coupling measure may be a relative coupling measure reflecting changes in the coupling.

For example, when the output power at the power receiver is kept constant, a change in the transmitter coil voltage or current will indicate that the coupling factor has changed. In power transmitters that use frequency control to control the transmitter coil current, the power receiver only needs to measure deviations of the frequency of the power signal to determine that the coupling factor has changed. In this case, the coupling measure may possibly be determined without requiring any communication between the power transmitter and the power receiver, and no knowledge about the properties of the coils are necessary.

It will be appreciated that the coupling measure may in some embodiments be determined to reflect the specific coupling factor but that in many embodiments the coupling measure may be indicative of the coupling between the transmitter coil and the receiver coil but without being determined to directly correspond to the coupling factor.

It will be appreciated that in the examples described above, some communication may be needed between the power transmitter 101 and the power receiver 105 in order to determine the coupling measure. For example, if the coupling processor 401 is implemented in the power transmitter controller 203, the power receiver 105 may transmit messages indicating the measured values (and possibly device values such as the self inductance of the receiver coil 107) to the power transmitter 101 which accordingly may determine the coupling measure using the received values with locally measured values. Conversely, if the coupling processor 401 is implemented in the power receiver controller 301, the power transmitter 101 may transmit measurements (and device data) to the power receiver 105 which may then determine the coupling measure.

The coupling processor 401 is coupled to a pose processor 403 for determining a first pose indication for one of the power transfer devices relative to the other power transfer device, also referred to as the complementary power transfer device. The pose processor 403 is arranged to determine the first pose indication in response to the coupling measure determined by the coupling processor 401. Thus, the pose processor 403 may be arranged to determine a pose indication reflecting the pose of the power transmitter 101 relative to the power receiver 105, or vice versa.

The term pose is a common term for position and/or direction/ orientation. The combination of the position and direction/ orientation of e.g. an object is referred to as a pose or placement of the object. A pose may also be only a position or only an orientation. A relative pose between two objects accordingly reflects the relative position and/or orientation of one object relative to another object. Thus, the first pose indication is indicative of at least one of a position and an orientation of the power transfer device relative to the complementary power transfer device, i.e. of the power receiver relative to the power transmitter, or of the power transmitter relative to the power receiver.

In the following, a number of different approaches for determining a pose indication will be described for a range of different configurations of the power coils of the power transmitter and power receiver. The pose processor 403 may typically determine the pose indication by a process that considers the geometries of the transmitter and receiver coils, any restrictions in the positions of the power receiver etc. Such relevant information may for example be stored in a memory of the pose processor 403 and retrieved when appropriate.

As a low complexity example, the pose indication may simply be determined as a monotonic function of the coupling factor. Specifically, the closer the coils are to each other (and indeed the more they overlap), the larger the coupling factor will tend to be, and accordingly the coupling factor may in some embodiments directly indicate the distance between the coils and thus between the power transfer devices.

The pose processor 403 is coupled to a user input processor 405 determining a user input value in response to the first pose indication. In many embodiments, the user input processor 405 may be arranged to determine a user input value in response to a change in the pose indication, such as for example a change in the position or orientation of the power transmitter 101 relative to the power receiver 105.

For example, the user input value may be a command value corresponding to an instruction/ command for a process to modify a parameter. Such a command value may be a command to change a parameter of the process. For example, in some embodiments, the user input value may correspond to an instruction, and the user input processor 405 may be arranged to generate a user input value indicative of an operation to be performed by a process, such as a program or algorithm, if the pose indication meets a criterion.

For example, if the user input processor 405 detects that the power receiver is positioned with a certain orientation relative to the power transmitter (e.g. within a certain range of relative rotation), it may proceed to generate a user input value indicating that a process should be initiated (e.g. to switch-on a device) and if it is detected that the orientation does not meet this criterion, then the process may be terminated (e.g. the device may be switched off).

The user input processor 405 may in many embodiments be arranged to generate the user input value to indicate a parameter value to apply by the process. Thus, a command value may be generated instructing the process to set a parameter value used in the process to a specific value.

For example, the distance between the power transmitter and the power receiver may be determined and mapped directly to a parameter value. This parameter value may then be used as the user input value and transmitted to the process and used to set an operational value for the process.

In some cases, the parameter value may be generated as a relative value, e.g. the user input value may be generated to indicate that a parameter value should be increased or decreased. For example, as a low complexity example, if the user input processor 405 indicates that the power transmitter and the power receiver are moved closer to each other, a user input value may be generated that instructs the process to increase a parameter value. As another example, if the user input processor 405 detects that the power receiver is rotated in a clockwise direction relative to the power transmitter, a user input value indicating that a parameter value (e.g. a blending speed or volume) should be increased and if it detects that the power receiver is rotated in an anticlockwise direction relative to the power transmitter, a user input value is generated indicating that the parameter value should be decreased.

The approach may provide additional functionality in a wireless power transfer system and may enable an improved user experience in many scenarios. Traditionally, free positioning design in Qi wireless charging is aimed at offering free placement at any position in any orientation on a power transmitter. This is great for the drop-and-forget use case of e.g. charging mobile phones in a household. The Inventors have realized that this can be used to provide additional functionality. In particular, it has been realized that using position and orientation of a power receiver device relative to a power transmitter device can advantageously be used for interaction purposes and that this is feasible via a consideration of poses based on evaluating coupling measures.

In many embodiments, the user input value may be used as an input value to a process of the power transfer device in which the user input processor 405 is implemented. For example, if the user input processor 405 is implemented in the power transmitter, it may control a parameter of a process executed by the power transmitter. Similarly, if the user input processor 405 is implemented in the power receiver, it may control a parameter of a process executed by the power receiver.

In many embodiments, the user input value may be used to control the power transfer operation. For example, if the user input processor 405 detects a specific change in pose of the power receiver relative to the power transmitter, it may proceed to increase the power level of the power transfer (e.g. a maximum power level). If the power level directly controls, e.g. a motor, the relative pose of the power receiver may accordingly directly control the speed of the motor.

In some embodiments, the user input value may alternatively or additionally to being used in the device in which it is determined, be communicated to another device, and specifically it may be transmitted to the complementary device. For example, if the user input processor 405 is determined in the power transmitter, it may be transmitted to the power receiver in which it may be used to control a given process. Similarly, if the user input processor 405 is determined in the power receiver, it may be transmitted to the power transmitter in which it may be used to control a given process.

In many scenarios where the user input value is used to control the power transfer operation itself, the user input value may be communicated to the complementary power transfer device and used in both the power receiver and power transmitter to adapt a parameter of the power transfer. For example, a delayed power transfer may be setup with the timing of the start of the power transfer being controlled by the rotation of the power receiver relative to the power transmitter.

It will be appreciated that the process for which the user input value is generated, and to which the user input value may be provided, may be performed by the power transmitter or the power receiver but that this is not required. Indeed, in some embodiments, the user input value may be transmitted to a third device implementing the process for which the user input value is generated. Thus, the approach may be used to control processes that are potentially completely unrelated to the power transfer operation itself.

Indeed, the user value may be communicated to a third device via e.g. a network such as the Internet thereby allowing even remote processes to be controlled.

It will be appreciated that the approach and determined user input value can be used for large range of applications, scenarios, and processes.

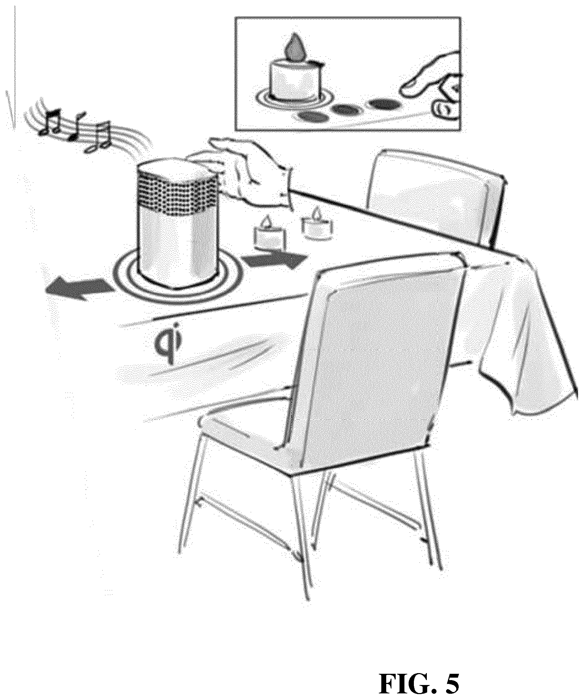

For example, as illustrated in FIG. 5, a radio or wireless speaker may be powered by wireless power transfer with the user being able to e.g. increase or decrease the volume simply be moving or rotating the radio/ speaker. As another example by changing the position/ orientation of e.g. a smart phone on a charging pad, the flight mode may be switched on or off, connection with wireless speakers may be made, or other operations of the smart phone may be controlled. In some scenarios, the relative pose of the smart phone may control unrelated processes, such as e.g. the brightness and/ or color of lights in the home etc. As other examples, the approach may be used to provide blender speed control, cooker temperature control, setting up a connection and activating data transfer / exchange between proximate device, initiating events in a Qi-enabled board game with electronically powered pawns, etc. etc.

The configuration and properties of power transfer coils may differ in different embodiments, and the approach for determining the pose indication may vary depending on such configurations. In some embodiments, the power transmitter may comprise only a single coil and the power receiver may comprise only a single coil. In other embodiments, as will be described in more detail later, the power transmitter and/or the power receiver may comprise multiple power transfer coils. Thus, the transmitter coil 103 may be part of transmitter power transfer coil arrangement and the receiver coil 107 may be part of a receiver power transfer coil arrangement where each of the arrangements may comprise one or more power transfer coils.

In an embodiment where the transmitter power transfer coil arrangement includes only the transmitter coil 103 and the receiver power transfer coil arrangement includes only the receiver coil 107, i.e. where each arrangement comprises only one power transfer coil, a distance between the power transmitter and power receiver may be determined directly as a mapping of the value of the coupling factor between the coils.

In many embodiments, the pose indication may advantageously comprise an indication of the relative orientation or rotation of the power receiver with respect to the power transmitter.

This may in many embodiments be achieved by the transmitter power transfer coil arrangement being rotationally variant (and thus may not be rotationally invariant) relative to the receiver power transfer coil arrangement. The geometric layout/ configuration of the transmitter power transfer coil arrangement may not be rotationally symmetric with respect to the receiver power transfer coil arrangement. Specifically, if the transmitter power transfer coil arrangement is rotated with respect to the receiver power transfer coil arrangement, the arrangements will not maintain the same electromagnetic coupling relationships. This may specifically be the case only for a range of rotations (e.g. there may be some rotational symmetry for some rotations, such as for a 90° rotation, but this will not be the case for all rotations). However, the rotational variance may exist for all possible relative position offsets, i.e. there may be no relative translational offset between the transmitter power transfer coil arrangement and receiver power transfer coil arrangement for which the arrangements are rotationally symmetric for all possible rotations.

For embodiments where the transmitter power transfer coil arrangement and receiver power transfer coil arrangement both comprise only a single power transfer coil, the power transfer coils may each be rotationally variant and may be non-circular. For example, the power transfer coils may be rectangular coils.

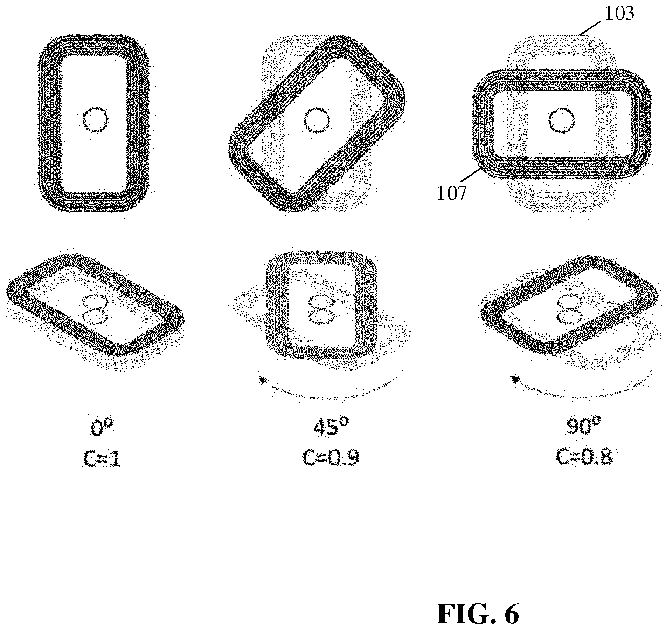

An example of suitable coil arrangements in such cases are illustrated in FIG. 6 where orientation/ rotation can be determined using a single, rectangle shaped coil for both the power transmitter and the power receiver. Assuming that the centers of the coils are aligned (e.g. by the user or by guide means, the rotation of the receiver coil 107 relative to the transmitter coil 103 will cause a gradient in coupling strength/ factor. Full coupling occurs if both coils are fully aligned (left example) and least coupling occurs when the coils are 90 degrees orthogonal to one another (right example). Thus, the coupling factor will reduce when the coils are rotated from being fully aligned to being 90 degrees out of alignment. The coupling measure can accordingly be mapped to a rotation which can be used as the pose indication that is then used to generate a user input value.

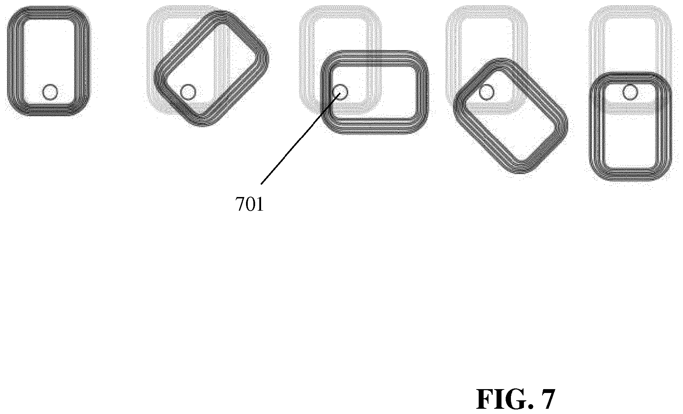

Another example is illustrated in FIG. 7 which corresponds to the example of FIG. 6 except that a different rotational (pivot) point is employed. In this case, the coupling measure will allow a 180° range of rotation to be determined, e.g. using a predetermined mapping determined by measurements or simulations during a design phase.

In many practical embodiments, the power transmitter may comprise a plurality of transmitter coils and thus the transmitter power transfer coil arrangement may comprise one or more power transfer coils in addition to the transmitter coil 103. In such an embodiment, the coupling processor 401 may be arranged to determine a plurality of coupling measures and specifically a coupling measure may be determined for each power transfer coil of the transmitter power transfer coil arrangement.

Thus, in an example where the coupling processor 401 and the pose processor 403 is implemented in the power transmitter, the coupling measure may determine at least a first and second coupling measure for the power transfer coils implemented in the power transmitter itself. The pose processor 403 may then determine the pose indication in response to all of the determined coupling measures. For example, the position of the power receiver relative to the power transmitter may be determined based on which coupling measure is the largest as this indicates that the receiver coil 107 is closer to the corresponding transmitter coil. Also, if the receiver coil 107 is rotationally variant, the coupling measures may in many embodiments be mapped to a rotation or orientation of the power receiver.

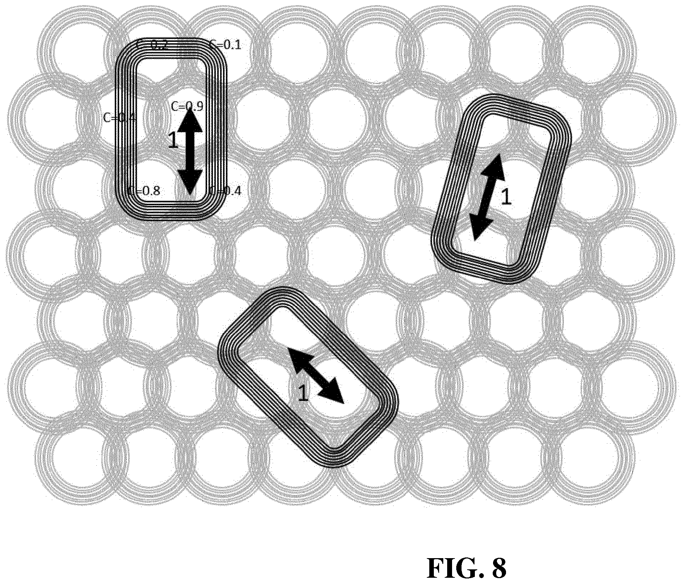

An example of a scenario in which the power transmitter power transfer coil arrangement comprises a plurality of coils and the receiver power transfer coil arrangement comprises only a single coil is illustrated in FIG. 8. In the example, the transmitter power transfer coil arrangement comprises a large number of coils and a coupling measure is determined for each coil. The position of the receiver coil in the array of transmitter coils may be determined based on the coupling measures. For example, the position may be determined as a maximum for the coupling measure, e.g. determined as position for which a spatially low pass filtered coupling measure array has a local gradient of zero. Subsequently, the orientation of the receiver coil, and thus of the power receiver, may be determined by analyzing the coupling measures in the vicinity of the position. For example, the orientation may be determined as the direction for which the coupling measures reduce the least, i.e. the direction of the smallest gradient from the determined center position.

The user input processor 405 may then determine the user input processor 405 in response to the determined pose indication, and e.g. use this user input value to control its own operation or e.g. to transmit it to the power receiver for use. The user input value may be determined based on the current position/ orientation or may be determined by a change in these.

As a specific example, the power transmitter may perform the following process:

    1. Detect a power receiver (e.g. a mobile device) on the power transmitter.

    2. Measure a first set of coupling measures for the transmit coils of the power transmitter power transfer coil arrangement relative to the receiver coil.

    3. Determine a first position and orientation vector for the power receiver in relation to the power transmitter power transfer coil arrangement based on mapping the measured coupling measures to the known geometries of the power transmitter power transfer coil arrangement and the receiver coil.

    4. After a short delay, measure a second set of coupling measures for the transmit coils of the power transmitter power transfer coil arrangement relative to the receiver coil.

    5. Determine a second position and orientation vector for the power receiver based on the second set of coupling measures.

    6. Determine a relative vector indicative of the change and determine a user input value in response to this relative vector.

    7. Transmit the user input value to the power receiver for input to a process, such as e.g. to cause a specified action.

Although it may be possible to determine the orientation of the power receiver in the example of FIG. 8, it may typically be difficult to do so highly accurately as the coupling to other transmitter coils than the nearest coil tends to be small and tends to not vary hugely with the orientation.

In some embodiments, the determination of rotation of the power receiver is aided by the receiver coil 107 being asymmetrically arranged in the power receiver. Specifically, the receiver coil 107 may be offset with respect to a(n intended) rotation point or center of the power receiver.

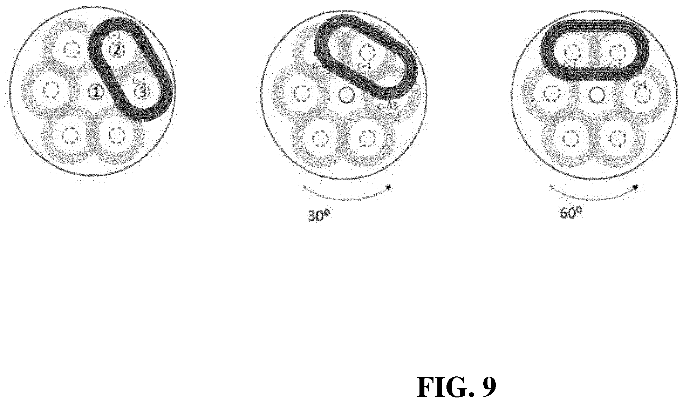

An example of this is illustrated in FIG. 9 where an elliptical receiver coil is located on a circular contact surface of a power receiver but offset with respect to a rotation point. In the example, six transmit coils fall within the circular surface of the power receiver. The coupling processor 401 may determine the coupling measure for these six transmitter coils and the pose indication may be determined in response to the values of the coupling measure. Specifically, the maximum coupling measure(s) may be an indication of the orientation of the power receiver being such that the receiver coil overlaps the corresponding transmitter coil(s).

In the example, the coupling processor 401 and pose processor 403 are both part of the device for which multiple coils are present, i.e. in the specific example they are both part of the power transmitter. However, in other embodiments, the plurality of coils may be in the complementary device from the one comprising the coupling processor 401 and the pose processor 403. For example, in the specific example, the power transmitter may comprise a single transmitter coil whereas the power receiver comprises a receiver power transfer coil arrangement with multiple receiver coils. In such a case, the power receiver may perform measurements of the different coils and report the measurements back to the power transmitter for use by the coupling processor 401 in determining coupling measures for the plurality of coil pairs.

In many embodiments, both the transmitter power transfer coil arrangement and the receiver power transfer coil arrangement may comprise a plurality of power transfer coils. In such an example, the coupling measure may for example determine coupling measures for all possible pairs of power transmitter coils and power receiver coils, and may determine the pose indication based on these coupling measures.

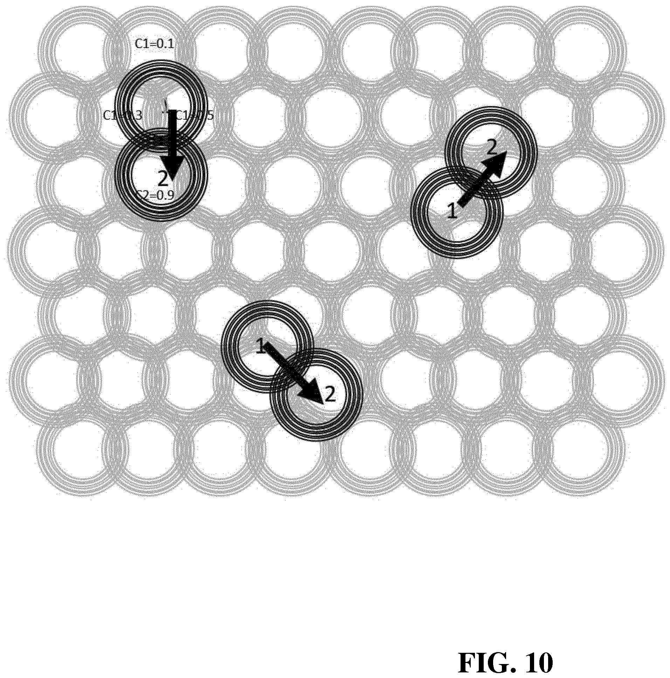

FIG. 10 illustrates an example wherein the power transmitter power transfer coil arrangement comprises a large number of transmitter coil and the receiver power transfer coil arrangement comprises two coils. In this case, the coupling measure for each receiver coil and each of the power transmitters may be determined. The pose indication can then be determined e.g. by finding the maximum low pass coupling measure position for each of the two receiver coils and setting the position as the midpoint between these and the orientation as the direction of the vector connecting one to the other. The approach may provide improved pose indication determination including potentially a whole 360° orientation range. For example, all coils may have unique IDs, allowing two receiver coils and a mesh of transmitter coils to determine the absolute position and rotation, e.g. in the setup of FIG. 10.

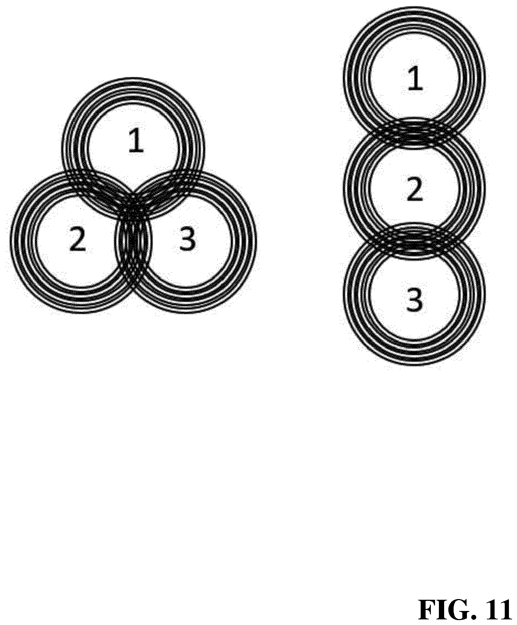

FIG. 11 illustrates some other potential configurations of the receiver power transfer coil arrangement.

In many embodiments, the approach may include an element which is arranged to constrain the position of the devices relative to each other. Thus, rather than having a total freedom in the positioning of the power receiver relative to the power transmitter, the system may include some constraint. This constraint may in some embodiments be achieved by substantially fixating one point of the power receiver relative to one point of the power transmitter. In many embodiments, the constraint of the position may be by a means for biasing the power receiver towards a position (or a set of positions) relative to the power transmitter.

As an example, in FIG. 6, the center point of the transmitter coil 103 may be fixed with respect to the center point of the receiver coil 107 thereby allowing only a rotation of the power receiver relative to the power transmitter with no translation or position offset being allowed. In FIG. 7, the power receiver may be fixed to the power transmitter at a rotation point 701 which is positioned close to the shorter side of the rectangular coils. In the example of FIG. 9, the center of the circular surface of the power receiver may be fixed with respect to the center of the transmitter coils.

The constraining of the relative positions may be advantageous in many embodiments. It may provide for a facilitated operation as it may provide guidance to the user thereby facilitating the user in performing operations that can provide a suitable user input. In addition, it may substantially assist in the accuracy and reliability in determining the user input value. It may specifically bias the operation towards scenarios which allow for clearer differentiations between coupling measures for different poses.

In the examples, the position is constrained or restricted and the pose indication may specifically determine a pose indication which is indicative of an orientation/ rotation only.

In other embodiments, the system may comprise functionality for constraining the orientation of the power receiver relative to the power transmitter and the pose indication may be determined taking this constraint into account. For example, it may be that the power receiver is restricted to have given orientation (e.g. by physical elements creating a channel in which the power receiver device can be positioned) but can be translated (e.g. moved up and down) with this orientation. From the changes in the coupling measures, an increase or decrease in the offset between the power transmitter and power receiver coils can be determined and this can be mapped into a translation in one dimension. Such an approach may for example be used to provide a slider user input functionality where the sliding up and down of e.g. a mobile device can change a parameter, such as e.g. the volume of music being played.

In some embodiments, the position and/or orientation of the power receiver relative to the power transmitter may be achieved by a physical element of one device engaging with the other device. For example, the power receiver device may comprise a protruding pin which can engage with a complementary hole in the power transmitter device (or vice versa).

In many embodiments, the means for constraining the relative pose may be achieved by magnetic elements in the devices. The magnetic elements may be arranged to couple with each other to bias the relative poses towards a given set of poses. Thus, the magnetic fields generated by respectively magnetic element of the power receiver and the power transmitter may interact to bias the relative pose towards a given set of poses, such as e,g. poses that are fixed positionally but not rotationally.

In many embodiments, one or both of the magnetic elements may be electromagnetic elements, and specifically may be inductors or coils, possibly with a magnetic material as a core.

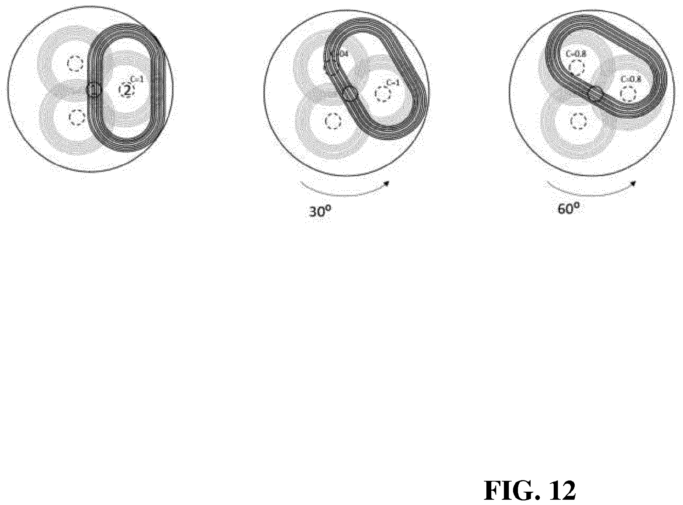

In some embodiments, one (or possibly both) of the magnetic elements constraining the position may be formed by the arrangement of power transfer coils. For example, the power receiver may comprise a permanent magnet that will couple with the electromagnetic field generated by the power transfer coils such that the magnetic fields will bias the relative position of the power receiver towards a given position. An example of this is provided in FIG. 12 where a magnet is provided in the power receiver (centrally for the circular contact surface) which will bias the position of the power receiver towards a position where the magnet will be positioned in the center of three power transfer coils. This may be the case due to the magnetic field generated by the three power transmitter coils interacting with the field of the permanent magnet.

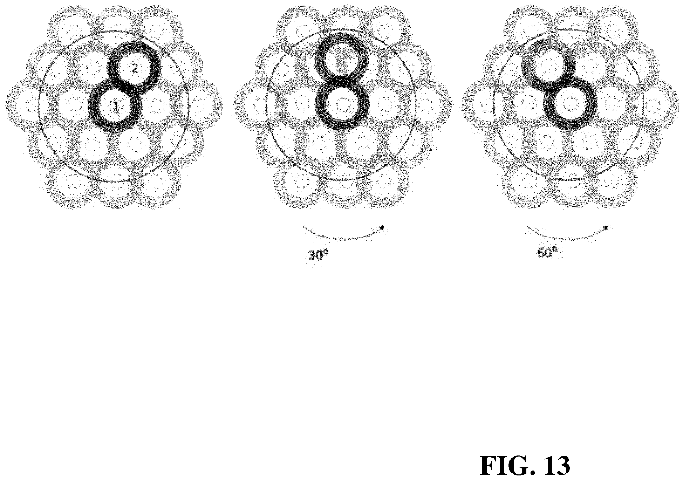

Another example is provided in FIG. 13 in which a first power receiver coil 1 may operate as an electromagnet which interacts with a magnet in the power transmitter power transfer coil arrangement to fix the position of this coil. Rotation around this pivot point may then be determined in response to a coupling measure for the second power receiver coil 2.

As a practical example, the approach can be considered for use with a power receiver in the form of a water cooker being positioned on a large base station implementing the power transmitter. By pushing a button on the water cooker, the electro magnet of receiver coil 1 may be powered and activated which results in this snapping onto a magnetic element (e.g. a ferrite element) in the base station (the dotted circles). If the user then rotates the water cooker, e.g. to set a certain temperature, receiver coil 1 remains aligned with the underlying transmitter coil, while receiver coil 1 will move from one to another transmitter coil as the cooker is rotated. The coupling measures and identification of receiver coil 1 and 2 can be used to determine the rotational angle and the temperature can be set accordingly.

As a possible variation, receiver coil 2 could have a somewhat weaker switchable electro magnet that is switched on after locking of the water cooker using the magnet of receiver coil 1. This magnet can then support the user in snapping to 60 degrees rotational positions, which may indicate certain settings, thereby facilitating the user making an accurate setting.

In the previous examples, the user input value is determined based on the pose of a power receiver device. However, in some embodiments, the coupling processor 401 may be arranged to determine one or more coupling measures for a second power receiver. Similarly, the pose processor 403 may be arranged to determine a pose indication for the second power receiver. The user input processor 405 may then determine the user input processor 405 based on both pose indications and specifically based on the relative poses.

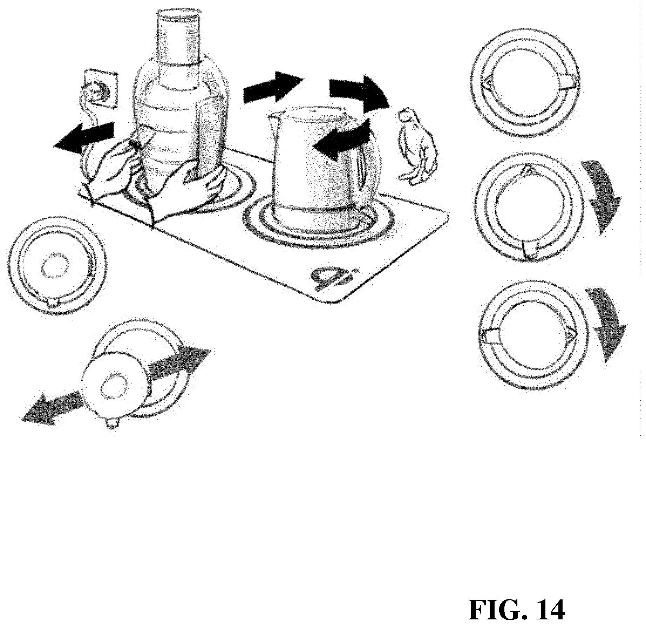

Thus, in some such embodiments, the system may allow for proximity, mutual movement, relative orientation and rotation of multiple devices to generate a user input (see e.g. FIG. 14).

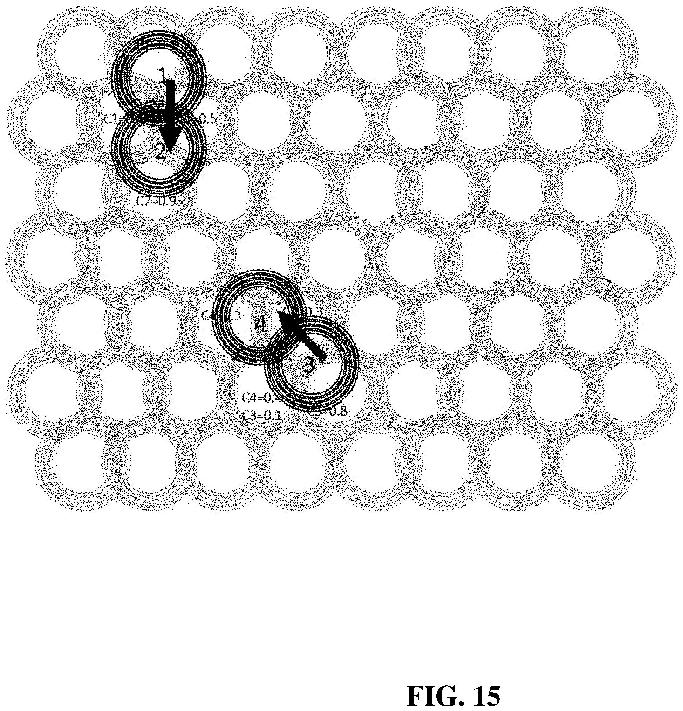

An example of a possible configuration is illustrated in FIG. 15. The previously described approach for determining a pose indication may in such an example be performed for both of the power receivers and the user input value may be determined by comparing the results. For example, a parameter value of the generated user input value may be increased, the closer the two devices are to each other.

Another example would be to include device identification (e.g. using NFC or other means including indeed the device identification built into Qi systems) which can e.g. be used to route the user input (determined by the transmitter coil(s)) to the right device.

The previous description has implicitly considered the coupling coefficient to be determined by a position and/or orientation in two dimensions. For example, the coupling factor is considered to be dependent on a position and/or orientation of a power receiver when positioned on a planar contact surface of the power transmitter. In these examples, the user input was determined in response to a coupling factor which may be changed by the user changing the position or orientation of the power receiver in the two dimensions. However, it will be appreciated that the coupling factor may also be dependent on the third dimension, and specifically on the distance in the direction orthogonal to the coil planes (which may also be referred to as the z plane).

In some embodiments, this may be exploited by directly allowing the user to modify the coupling factor by changing the z-distance, e.g. by moving the receiver coil 107 further from the transmitter. This may e.g. be done by the power receiver device having the coil mounted on a support that can be manually moved in the z-direction. The user may accordingly provide a user input by moving the support closer or further away from the transmitter coil.

In some embodiments, it may be desirable for the user input to mainly be dependent on two dimensions and any variation in the third direction may be considered as a potential source of noise or interference. In such embodiments, additional means may possibly be included to compensate for such variations, for restricting such variations, or for detecting such variations in order to ensure that the user input is valid.

For example, a z-direction distance from the power transmitter to the power receiver may be measured using mechanical means (e.g. using a small spring loaded tap and measuring the extension of this). In some embodiments, such a measurement may be used to adapt e.g. the determination of the user input from the coupling factor (e.g. a different decision criterion may be used). In other embodiments, the distance may be used to invalidate any user inputs unless the distance is below a given threshold.

In some embodiments, functionality may be included to prevent that changes in coupling factor caused by placing or removing devices may be interpreted as a user input. This may for example be done by including requirements on the speed of change of the coupling factor. As another example, a light sensor may be used to detect whether the power receiver device is positioned in close z-direction proximity or is e.g. picked up.

As yet another example, in some embodiments, there may be a requirement that the coupling factor should e.g. exceed a given value (say e.g. 0.8) before any determined user input can be considered valid.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transfer apparatus for a wireless power transfer from a power transmitter to a power receiver via a power transfer signal, the power transfer apparatus being one of the power transmitter and the power receiver, and comprising:

    a first power transfer coil (103, 107) for transferring power with a complementary power transfer coil (103, 107) of a complementary power transfer apparatus, the complementary power transfer apparatus being the other of the power transmitter and the power receiver;
    a coupling processor (401) for determining a first coupling measure indicative of a coupling between the first power transfer coil and the complementary power transfer coil;
    a pose processor (403) for determining a first pose indication for the power transfer apparatus relative to the complementary power transfer apparatus in response to the first coupling measure; and
    a user input processor (405) for determining a user input value in response to the first pose indication.

2. The power transfer apparatus of claim 1 further comprising a communicator (205, 305) for communicating the user input value to another apparatus.

3. The power transfer apparatus of claim 2 wherein the another apparatus is the complementary apparatus.

4. The power transfer apparatus of any previous claim further comprising a second power transfer coil and wherein:

    the coupling processor (401) is further arranged to determine a second coupling measure indicative of a coupling between the second power transfer coil and the complementary power transfer coil; and
    the pose processor (403) is further arranged to determine the first pose indication in response to the second coupling measure.

5. The power transfer apparatus of any previous claim wherein
the coupling processor (401) is further arranged to determine a second coupling measure indicative of a coupling between the first power transfer coil and an additional power transfer coil of the complementary apparatus; and
the pose processor (403) is further arranged to determine the first pose indication in response to the second coupling measure.

6. The power transfer apparatus of any previous claim comprising a first power transfer coil arrangement of the power transfer apparatus which comprises the first power transfer coil is rotationally variant relative to a second power transfer coil arrangement of the complementary apparatus which comprises the complementary power transfer coil; and wherein the pose processor (403) is arranged to determine the first pose indication in response to the rotational variation.

7. The power transfer apparatus of claim 6 wherein the power transfer apparatus comprises an element for constraining a position of the complementary power transfer apparatus relative to the power transfer apparatus.

8. The power transfer apparatus of claim 7 wherein the element is a magnetic element arranged to generate a magnetic field for constraining the position by interacting with a magnetic field generated by the complementary apparatus.

9. The power transfer apparatus of claim 8 wherein the magnetic element is the first power transfer coil (103, 107).

10. The power transfer apparatus of claim 6 wherein the power transfer apparatus comprises an element for restricting an orientation of the complementary power transfer apparatus relative to the power transfer apparatus.

11. The power transfer apparatus of any of the claims 6-10 wherein the first transfer coil arrangement consists only of the first power transfer coil and the second power transfer coil arrangement consists only of the complementary power transfer coil.

12. The power transfer apparatus wherein the power transfer apparatus is the power receiver and the complementary power transfer apparatus is the power transmitter.

13. The power transfer apparatus wherein the power transfer apparatus is the power transmitter and the complementary power transfer apparatus is the power receiver.

14. The power transfer apparatus of claim 12 wherein the coupling processor (401) is further arranged to determine a second coupling measure indicative of a coupling between the first power transfer coil and an additional power transfer coil of an additional power receiver;

the pose processor (403) is further arranged to determine a second pose indication for the power transfer apparatus relative to the additional power receiver in response to the second coupling measure; and the user input processor (405) is arranged to determine the user input value in response to the first pose indication relative to the second pose indication.

15. A method of operation for a power transfer apparatus performing a wireless power transfer from a power transmitter to a power receiver via a power transfer signal, the power transfer apparatus being one of the power transmitter and the power receiver, and the method comprising:

a first power transfer coil (103, 107) transferring power with a complementary power transfer coil (103, 107) of a complementary power transfer apparatus, the complementary power transfer apparatus being the other of the power transmitter and the power receiver;

determining a first coupling measure indicative of a coupling between the first power transfer coil and the complementary power transfer coil;

determining a first pose indication for the power transfer apparatus relative to the complementary power transfer apparatus in response to the first coupling measure; and

determining a user input value in response to the first pose indication.

101

105

103

PTX

PRX

107

**FIG. 1**

**FIG. 2**

**FIG. 3**

401

CPL
PRC

403

PSE
PRC

405

UI
PRC

**FIG. 4**

EP 3 644 475 A1

FIG. 5

19

**FIG. 6**

701

**FIG. 7**

**FIG. 8**

**FIG. 9**

**FIG. 10**

**FIG. 11**

FIG. 12

**FIG. 13**

**FIG. 14**

**FIG. 15**

Europäisches
Patentamt

European
Patent Office

Office européen
des brevets

# EUROPEAN SEARCH REPORT

Application Number

EP 18 20 2207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/052649 A1 (PATEL PARIN [US]) 22 February 2018 (2018-02-22) * figures 1-7 * * paragraph [0030] - paragraph [0038] * ----- | 1-15 | INV. H02J50/10 H02J50/12 H02J50/90 H02J50/80 H04W4/02 |
| X | WO 2017/148744 A1 (PHILIPS LIGHTING HOLDING BV [NL]) 8 September 2017 (2017-09-08) * page 2, line 14 - page 2, line 21 * * page 3, line 13 - page 3, line 31 * * page 14, line 13 - page 15, line 10 * * figures 1-6 * ----- | 1,15 | ADD. H05B6/02 |
| X | US 2012/181876 A1 (BAARMAN DAVID W [US] ET AL) 19 July 2012 (2012-07-19) * figures 1-33 * * paragraph [0060] - paragraph [0061] * ----- | 1,15 | |
| X | EP 2 750 361 A1 (NOKIA CORP [FI]) 2 July 2014 (2014-07-02) * figures 1-6 * * paragraph [0028] - paragraph [0036] * ----- | 1,15 | |

TECHNICAL FIELDS
SEARCHED (IPC)

H02J
H04W
H05B

The present search report has been drawn up for all claims

| Place of search | Date of completion of the search | Examiner |
|---|---|---|
| Munich | 9 April 2019 | Dudoignon, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 20 2207

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2019

| Patent document cited in search report | | | Publication date | Patent family member(s) | | | Publication date |
|---|---|---|---|---|---|---|---|
| US 2018052649 | A1 | | 22-02-2018 | CN | 109565187 | A | 02-04-2019 |
| | | | | KR | 20190028775 | A | 19-03-2019 |
| | | | | US | 2018052649 | A1 | 22-02-2018 |
| | | | | WO | 2018034889 | A1 | 22-02-2018 |
| WO 2017148744 | A1 | | 08-09-2017 | CN | 108886860 | A | 23-11-2018 |
| | | | | EP | 3424280 | A1 | 09-01-2019 |
| | | | | JP | 2019507486 | A | 14-03-2019 |
| | | | | US | 2019074718 | A1 | 07-03-2019 |
| | | | | WO | 2017148744 | A1 | 08-09-2017 |
| US 2012181876 | A1 | | 19-07-2012 | AU | 2009215464 | A1 | 27-08-2009 |
| | | | | CA | 2715918 | A1 | 27-08-2009 |
| | | | | CN | 102017353 | A | 13-04-2011 |
| | | | | EP | 2258032 | A2 | 08-12-2010 |
| | | | | JP | 5543378 | B2 | 09-07-2014 |
| | | | | JP | 2011514796 | A | 06-05-2011 |
| | | | | KR | 20100116627 | A | 01-11-2010 |
| | | | | KR | 20150108939 | A | 30-09-2015 |
| | | | | RU | 2010138845 | A | 27-03-2012 |
| | | | | TW | 200952004 | A | 16-12-2009 |
| | | | | US | 2009212637 | A1 | 27-08-2009 |
| | | | | US | 2012181876 | A1 | 19-07-2012 |
| | | | | WO | 2009105615 | A2 | 27-08-2009 |
| EP 2750361 | A1 | | 02-07-2014 | CN | 104969536 | A | 07-10-2015 |
| | | | | EP | 2750361 | A1 | 02-07-2014 |
| | | | | JP | 6105749 | B2 | 29-03-2017 |
| | | | | JP | 2016509823 | A | 31-03-2016 |
| | | | | TW | 201433042 | A | 16-08-2014 |
| | | | | US | 2015357862 | A1 | 10-12-2015 |
| | | | | WO | 2014102450 | A1 | 03-07-2014 |

EPO FORM P0459

For more details about this annex : see Official Journal of the European Patent Office, No. 12/82